# EUROPEAN PATENT APPLICATION

(11) **EP 4 765 161 A1**
(43) Date of publication of application: **24.06.2026**
(21) Application number: 24222487.1
(22) Date of filing: 20.12.2024
(51) Int. Cl.: G21C 1/22, G21C 3/54

(54) **A MOLTEN SALT REACTOR SYSTEM**

(71) Applicant: Saltfoss Energy ApS, 2200 Copenhagen (DK)
(72) Inventor: BURES, Lubomir, 2200 Copenhagen (DK); NILSSON, Per, 2200 Copenhagen (DK); HOVDINGHOFF, Jannik, 2200 Copenhagen (DK); RUSCOE, Timothy, 2200 Copenhagen (DK); BERGAMASCO, Luca, 2200 Copenhagen (DK); YOON, Juhyeon, 2200 Copenhagen (DK)
(74) Representative: Meissner Bolte Partnerschaft mbB

(57) **Abstract**

The present invention relates to a molten salt reactor system comprising a reactor vessel comprising a reactor core in an upper compartment, and one or more drain tanks situated in a lower compartment below the upper compartment, and a molten fuel salt pump, and a heat exchanger, wherein a molten fuel salt flow direction is provided in a fuel salt loop, said fuel salt loop comprising the reactor core, the one or more drain tanks, the molten fuel salt pump, and the heat exchanger, the direction of the molten fuel salt flow is from the heat exchanger towards the reactor core, wherein (a) the one or more drain tanks are located between the reactor core and the molten fuel salt pump in the molten fuel salt flow direction and the molten fuel salt pump is located between the one or more drain tanks and the heat exchanger in the molten fuel salt flow direction and the heat exchanger is located between the molten fuel salt pump and the reactor core in the molten fuel salt flow direction and the reactor core is located between the heat exchanger and the one or more drain tanks in the molten fuel salt flow direction, or (b) the molten fuel salt pump is located between the reactor core and the one or more drain tanks in the molten fuel salt flow direction and the one or more drain tanks are located between the molten fuel salt pump and the heat exchanger in the molten fuel salt flow direction and the heat exchanger is located between the one or more drain tanks and the reactor core in the molten fuel salt flow direction and the reactor core is located between the heat exchanger and the molten fuel salt pump in the molten fuel salt flow direction, wherein the lower compartment is provided with a passive decay heat removal system.

## Description

### Field of the invention

The present invention relates to a molten salt reactor (MSR) system including the reactor core, drain tanks for the molten salt, a molten fuel salt pump and a heat exchanger. The molten salt reactor system is interfaced with an off-gas system for the gaseous fission products. The entire system of the molten salt reactor system and the off-gas system present among other a compact space-saving system and pressure stable molten salt reactor system. The present invention furthermore relates to a method of operating a molten salt reactor system and a power barge comprising the molten salt reactor system.

### Background of the invention

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile U-233 from thorium, of producing much lower levels of transuranic actinide waste than uranium/plutonium fuelled reactors; capable of operating at high temperatures, capable of avoiding accumulation of volatile radioactive fission products in solid fuel rods and capable of combusting larger amounts of fissile material than is possible in conventional reactors. Other particular attractive features of an MSR are the operation at ambient or low pressure and the retention of the fission products as strongly bonded salts which are conventionally either fluoride salts or chloride salts.

The operation of an MSR relies on other components than the reactor core producing heat from the fission process. These other components beside the reactor core comprise the molten fuel salt drain tank, the molten fuel salt pump, the decay heat removal system, the primary heat exchanger, the off-gas system and piping that connects these components to form the molten fuel salt loop. Various advantages and disadvantages exist depending on the specific choice of sequence of the components along the molten fuel salt loop comprising and connecting the components. The components will be described in the following.

The MSR comprises a reactor core that produces heat from the fission process and the core comprises a moderator for the neutrons in the case of a thermal reactor type. The moderator material is conventionally graphite that the molten fuel salt passes through and is in contact with and it is a concern to avoid infiltration of the molten salt fuel into the graphite.

The molten fuel salt drain tank has the function of holding the molten fuel salt for storage and most prominently to provide safety measure. In case of an emergency, for example fuel pump failure or reactivity excursion the fission reaction can be stop ped by simply removing the fissile material in the molten fuel salt from the moderator by draining the molten fuel salt out of the reactor core into the molten fuel salt drain tank. The draining process must be fast requiring several m³ of molten fuel salt to exit the reactor core. The molten fuel salt drain tank is conventionally situated at a lower elevation than the reactor core to make use of the gravitational force for a passive way of draining.

The molten fuel salt pump provides a flow of the molten fuel salt in the molten fuel salt loop between the other components of the loop. The pump pressure must be sufficient to drive the molten fuel salt around in the loop and the pump is a high-power pump that is needed to drive the flow of the molten fuel salt. A molten fuel salt typically contains uranium or transuranium salts with a high density of 4000-5000 kg/m³ and the flow speed are a few m/s in the reactor core. Given that the molten fuel salt volume in the reactor is a few m³, an order of several tons of fuel salt are pumped through the reactor core each second.

The decay heat removal system is a conventional a safety measure that deals with the heat evolving after the fission process has stopped in the reactor core. The decay heat removal system must be capable of removing several MW of power from the decaying fission products during the first hours after the fission process has stopped and is conventionally a passive system requiring no pumps for cooling liquids.

The primary heat exchanger provides the transfer of the produced heat from the reactor core to other uses such as the provision of steam to drive an electricity producing turbine. The heat exchanger has conventionally a path for one flow of molten fuel salt separate from but in thermal contact with another flow of a heat transfer salt, said heat transfer salt transporting the heat to for example the turbine. A considerable pressure drop occurs in the molten fuel salt pump pressure for the passage of the molten fuel salt along the path through the heat exchanger holding several m³ of molten fuel salt.

The off-gas system is a component that handles the fission products that are in a gaseous state and therefore are not soluble like most of the other fission products in the molten fuel salt. Gaseous fission products are continuously produced and will accumulate in the gas/salt interfaces in the molten fuel salt loop, such as the headspace of the reactor core. The accumulated gases built up pressures in the fuel salt loop and must continuously be removed and eventually dealt with as waste during decommissioning. A conventional way of removing the gaseous fission products is to store them in containers but a substantial amount of heat is generated from the decay of especially the shorter-lived gaseous fission product isotopes. The largest loading of radionuclides in the off-gas system will come from the noble gas fission products. Radioactive isotopes of xenon and krypton will be present in a variety of radionuclides with a range of half-lives (t½) including ¹³⁹Xe (t½ = 39.5 s), ¹³⁷Xe (t½ = 3.83 min), ¹³⁵mXe (t½ = 15.3 min), ¹³⁵Xe (t½ = 9.1 h), ¹³³mXe (t½ = 2.19 d), ¹³³Xe (t½ = 5.25 d), ⁹⁰Kr (t½ = 32.3 s), ⁸⁹Kr (t½ = 3.18 min), ⁸⁸Kr (t½ = 2.84 h), and ⁸⁵Kr (t½ = 10.76 y).

MSRs conventionally have cover gas systems from which the fission gases are removed from the reactor vessel after a period of decay to avoid pressurization of the fuel salt circuit. By extending the time before transporting the gaseous fission products from the core to storage the build-up of heat in the fission gas storage facility can be avoided, such as storage in charcoal beds. This requires a means to remove the decay heat in the extended time before transporting to storage and is conventionally done in a dedicated holding tank with a dedicated decay heat removal system to supplement the decay heat removal system for the molten fuel salt.

WO24083299 discloses a molten salt reactor where molten fuel salt flows through the reactor core. A liquid moderator is used and a pump for the liquid moderator is positioned after the reactor and before the heat exchanger. The loop for the liquid moderator passes through a drain tank for the liquid moderator. It also discloses a pump for a molten fuel salt positioned before the reactor and after the heat exchanger. The loop for the molten fuel salt passes through a drain tank for the molten fuel salt.

WO24040209 discloses a molten salt reactor and a reactor vessel where molten fuel salt flows through the reactor core having a graphite moderator. A pump for a molten fuel salt is positioned on the molten fuel salt loop between the reactor core and the heat exchanger. The loop for the molten fuel salt does not pass through the drain tank for the molten fuel salt but passes instead directly from the heat exchanger to the reactor core. The drain tank is situated between the heat exchanger and the reactor core. Draining of the molten fuel salt does not take place with a conventional freeze plug on in the molten fuel salt pipe. Instead, a gas system is disclosed that operates to pressurize the drain tank during normal operations such that the molten fuel salt is restricted from flowing into the drain tank.

The report ORNL-4396 "MOLTENSALT REACTOR PROGRAMSEMIANNUAL PROGRESS REPORT" by M. W. Rosenthal et al., Oak Ridge National Laboratory from August 1969 discloses the use of the fuel-salt drain tank as a 2-hour delay tank for the cover-gas containing gaseous fission products. The reactor is the MSBR (molten salt breeder reactor). The cooling system of the tank is used to control the decay heat as well as using the cover-gas flow to preheat the vessel to minimize any thermal shock should it be needed to rapidly drain the salt. The off-gas is introduced from the molten fuel salt loop via the fuel salt pump and a gas separator that separates the molten fuel salt and the off-gas so that only the off-gas is stored in the fuel-salt drain tank and not the molten fuel salt.

It was an object of the present invention to provide a compact design of a molten salt reactor system that includes the essential components of a reactor core, one or more drain tanks, a primary heat exchanger, a decay heat removal system and an off-gas system.

It was a further object of the present invention to provide a compact off-gas system.

It was a further object of the present invention to provide an improved draining system for the molten fuel salt.

It was a further object of the present invention to provide a hydraulic and pressure stable molten salt reactor system.

It was a further object of the present invention to provide a low absolute pressure of the molten fuel salt at the inlet of the reactor core.

In accordance with an aspect of the invention, there is provided a molten salt reactor system comprising a reactor vessel comprising a reactor core in an upper compartment, and one or more drain tanks situated in a lower compartment below the upper compartment, and a molten fuel salt pump, and a heat exchanger, wherein a molten fuel salt flow direction is provided in a fuel salt loop, said fuel salt loop comprising the reactor core, the one or more drain tanks, the molten fuel salt pump, and the heat exchanger, the direction of the molten fuel salt flow is from the heat exchanger towards the reactor core, wherein (a) the one or more drain tanks are located between the reactor core and the molten fuel salt pump in the molten fuel salt flow direction and the molten fuel salt pump is located between the one or more drain tanks and the heat exchanger in the molten fuel salt flow direction and the heat exchanger is located between the molten fuel salt pump and the reactor core in the molten fuel salt flow direction and the reactor core is located between the heat exchanger and the one or more drain tanks in the molten fuel salt flow direction, or (b) the molten fuel salt pump is located between the reactor core and the one or more drain tanks in the molten fuel salt flow direction and the one or more drain tanks are located between the molten fuel salt pump and the heat exchanger in the molten fuel salt flow direction and the heat exchanger is located between the one or more drain tanks and the reactor core in the molten fuel salt flow direction and the reactor core is located between the heat exchanger and the molten fuel salt pump in the molten fuel salt flow direction, wherein the lower compartment is provided with a passive decay heat removal system.

In accordance with another aspect of the invention, there is provided a method of operating a molten salt reactor system according to the aspect of the invention of the molten salt reactor system.

In accordance with yet another aspect of the invention, there is provided a power barge comprising at least one molten salt reactor system according to the aspect of the invention of the molten salt reactor system to generate heat evolved in a nuclear fission reaction and at least one steam turbine generator to produce electricity utilising said generated heat.

### Detailed Description

The molten salt reactor system comprises a reactor vessel comprising a reactor core in an upper compartment, and one or more drain tanks situated in a lower compartment below the upper compartment, and a molten fuel salt pump, and a heat exchanger, wherein a molten fuel salt flow direction is provided in a fuel salt loop, said fuel salt loop comprising the reactor core, the one or more drain tanks, the molten fuel salt pump, and the heat exchanger, the direction of the molten fuel salt flow is from the heat exchanger towards the reactor core, wherein (a) the one or more drain tanks are located between the reactor core and the molten fuel salt pump in the molten fuel salt flow direction and the molten fuel salt pump is located between the one or more drain tanks and the heat exchanger in the molten fuel salt flow direction and the heat exchanger is located between the molten fuel salt pump and the reactor core in the molten fuel salt flow direction and the reactor core is located between the heat exchanger and the one or more drain tanks in the molten fuel salt flow direction, or (b) the molten fuel salt pump is located between the reactor core and the one or more drain tanks in the molten fuel salt flow direction and the one or more drain tanks are located between the molten fuel salt pump and the heat exchanger in the molten fuel salt flow direction and the heat exchanger is located between the one or more drain tanks and the reactor core in the molten fuel salt flow direction and the reactor core is located between the heat exchanger and the molten fuel salt pump in the molten fuel salt flow direction, wherein the lower compartment is provided with a passive decay heat removal system.

We find that such a molten salt reactor system has many advantages.

The constant heating of the drain tanks by letting drain tanks be part of the flow of molten salt loop prevents any thermal shocks of the drain tanks walls in the event of a draining, especially an emergency draining which proceed very fast.

An advantage of the relatively large volume in the drain tanks is that this will allow for a storage time of the newly formed fission gas in the reactor situated in the molten salt loop before the drain tanks. It is especially some of the short-lived fission products of Xe and Kr that are allowed a resident time in the drain tanks, such as ¹³⁹Xe, ¹³⁷Xe, ¹³⁵mXe, ⁹⁰Kr, ⁸⁹Kr. The many megawatts of decay heat from these isotopes are in general removed with the decay heat removal system forming part of any molten salt reactor system. The location of the drain tanks enables that the decay heat is removed from the newly formed gaseous fission products. This would otherwise have been dealt with in a dedicated off-gas resident tank taking up space somewhere else along the molten fuel salt loop or in the off-gas system. This advantage is augmented when the total flow of the salt is passing through the drain tanks as the fuel salt absorbs heat from the decaying fission gases that is removed out of the drain tanks with the flow of the fuel salt.

The molten salt reactor system.

In one embodiment, a molten salt reactor system is provided, comprising a reactor vessel comprising a reactor core in an upper compartment, and one or more drain tanks situated in a lower compartment below the upper compartment, and a molten fuel salt pump, and a heat exchanger, wherein a molten fuel salt flow direction is provided in a fuel salt loop, said fuel salt loop comprising the reactor core, the one or more drain tanks, the molten fuel salt pump, and the heat exchanger, the direction of the molten fuel salt flow is from the heat exchanger towards the reactor core, wherein (a) the one or more drain tanks are located between the reactor core and the molten fuel salt pump in the molten fuel salt flow direction and the molten fuel salt pump is located between the one or more drain tanks and the heat exchanger in the molten fuel salt flow direction and the heat exchanger is located between the molten fuel salt pump and the reactor core in the molten fuel salt flow direction and the reactor core is located between the heat exchanger and the one or more drain tanks in the molten fuel salt flow direction, or (b) the molten fuel salt pump is located between the reactor core and the one or more drain tanks in the molten fuel salt flow direction and the one or more drain tanks are located between the molten fuel salt pump and the heat exchanger in the molten fuel salt flow direction and the heat exchanger is located between the one or more drain tanks and the reactor core in the molten fuel salt flow direction and the reactor core is located between the heat exchanger and the molten fuel salt pump in the molten fuel salt flow direction, wherein the lower compartment is provided with a passive decay heat removal system.

The molten salt reactor is part of the molten salt reactor system. The molten salt reactor is the component where most of the fission reactions takes place.

The components of the molten salt reactor system comprise the molten fuel salt, the molten fuel salt pump, the reactor core in the reactor vessel, the one or more drain tanks, the heat exchanger, the off-gas system, the passive decay heat removal system and piping structures, such as pipes or piping that connects the components to form a fuel salt loop. A high-point tank for molten fuel salt and gaseous fission products may also be part of the molten salt reactor system.

The fuel salt loop constitutes the flow of molten fuel salt between the molten fuel salt pump, the reactor core in the reactor vessel, the one or more drain tanks and the heat exchanger. The fuel salt loop comprises piping structures, such as pipes or piping that connect the molten fuel salt pump, the reactor vessel, the one or more drain tanks and the heat exchanger, with each other and wherein the molten fuel salt pump, the reactor vessel, the one or more drain tanks and the heat exchanger have one or more inlets and one or more outlets that connects to the piping structures, such as pipes or piping.

In one embodiment, the molten fuel salt flow in the molten fuel salt loop is provided by the molten fuel salt pump on the molten fuel salt loop and the reactor vessel, the one or more drain tanks, the heat exchanger are all also part of the molten fuel salt loop. The molten fuel salt pump may be a centrifugal or axial pump capable of having an output in the range of 3000 to 7000 kg of molten fuel salt per second.

In one embodiment, (a) the one or more drain tanks are located between the reactor core and the molten fuel salt pump in the molten fuel salt flow direction and the molten fuel salt pump is located between the one or more drain tanks and the heat exchanger in the molten fuel salt flow direction and the heat exchanger is located between the molten fuel salt pump and the reactor core in the molten fuel salt flow direction and the reactor core is located between the heat exchanger and the one or more drain tanks in the molten fuel salt flow direction.

The location of the drain tanks being directly after the reactor core in the downstream direction of the molten fuel salt flow is a way to decrease the absolute molten fuel salt pump pressure. A low pump pressure in the reactor core is advantageous, and a sufficiently low pump pressure at the inlet of the reactor core is needed to avoid infiltration of the molten fuel salt into the moderator material when a solid moderator is used, such as a graphite material. The elevation height difference between the location of the reactor core being in the upper compartment and the one or more drain tanks being in the lower compartment also contributes to the pump pressure because of the hydrostatic pressure of the molten fuel salt being a high-density liquid. The close location of the drain tanks to the reactor has also the benefit that the gaseous fission products will be transported directly, without another component in-between, from the reactor core to the drain tank where the gaseous fission products are allowed to decay during a holding time in the drain tanks. This is a less space-consuming solution to deal with the decay heat from the short-lived gaseous fission products than providing a separate and dedicated holding tank with an accompanying dedicated decay heat removal system for the fission gases. The existing decay heat removal system in the lower compartment where the drain tanks are located will function as the decay heat removal system for the gaseous fission products while they are held in the drain tanks. The decay heat removal system may be a system as described in copending PCT application PCT/EP2024/068507 that removes heat from the molten fuel salt in the drain tanks of a molten salt reactor system.

The location of the molten fuel salt pump directly after the drain tanks in the direction of the flow, thus in the downstream direction enables less pressure to be applied in the drain tanks under nominal operation. This is because the pump located after the drain tanks in the direction of the flow can be provided with a low inlet pressure when the pump is at a similar elevation or slightly higher than the drain tanks, because a low hydrostatic pressure is present because of the slight high difference between the pump and the drain tanks.

By placing the heat exchanger directly after the molten fuel salt pump in the downstream direction of the molten fuel salt, the pump pressure is lowered before the molten fuel salt enters the reactor core because of the pressure loss in the heat exchanger. This provides a lower risk of salt intrusion in the moderator, such as when the moderator structure comprises graphite. Furthermore, the location of the pump before the heat exchanger and thus before the molten fuel salt is lowered in temperature, lowers the risk of deposition of corrosion products in the pump and in the adjacent pipes of the molten fuel salt loop. The plating out and deposition of material on the surfaces in the pump and the pipes can lead to material damage/deterioration and modification of the pressure drop. Instead, any corrosion products will primarily deposit in the cold leg after the heat exchanger and not in the hot leg where the molten fuel salt pump is located.

In one embodiment, (b) the molten fuel salt pump is located between the reactor core and the one or more drain tanks in the molten fuel salt flow direction and the one or more drain tanks are located between the molten fuel salt pump and the heat exchanger in the molten fuel salt flow direction and the heat exchanger is located between the one or more drain tanks and the reactor core in the molten fuel salt flow direction and the reactor core is located between the heat exchanger and the molten fuel salt pump in the molten fuel salt flow direction, wherein the lower compartment is provided with a passive decay heat removal system.

The location of the drain tanks being after the molten fuel salt pump in the direction of the flow, enables less pressure to be applied in the reactor core under nominal operation. This is because with this sequence of the components of the fuel salt loop, there is a pump pressure drop from the two other components than the reactor core in the molten salt loop, namely the drain tanks and the heat exchanger before the reactor core. By placing the molten fuel salt pump before the one or more drain tanks this provides the largest pressure drop in the loop and thus a low pressure of the molten salt when entering the core, thereby minimising the risk of molten salt infiltration in the graphite moderator.

In one embodiment, the molten salt reactor system further comprises an off-gas system connected to one or more off-gas inlets and off-gas outlets on the one or more drain tanks, the one or more high-point tanks, and the molten fuel salt pump.

The off-gas system.

The off-gas system receives the gaseous fission products from all components in the molten salt reactor system with a gas/salt interface, for example the pump bowl of the molten fuel salt pump, the one or more drain tanks and a high-point tank. The high-point tank is a means to collect gaseous fission products close to formation in the reactor core and to maintain a stable pressure in the gas-part of the molten salt reactor system.

The interface of the off-gas system is to the gas-part of the molten salt reactor system, as the molten salt reactor system is the source of the off-gasses. The majority of off-gas will be present in the drain tanks as a result of the larger gas/salt area. In one embodiment, there is a connection for a gas flow between the one or more drain tanks to the off-gas system and a connection for a gas flow between the high-point tank to the off-gas system. After production and a delay period in the molten salt reactor system, the off-gas is vented to the off-gas system for further treatment. The direction of the off-gasses to the off-gas system can be aided with purging a gas of e.g. He with inlets and outlets to the drain tanks for the He-purging gas and with inlets and outlets to the high-point tank for the He-purging gas. These inlets and outlets also provide a means to regulate the gas pressure in the molten salt reactor system.

In one embodiment, a gas system is provided to the molten salt reactor system comprising inlets and outlets to the one or more drain tanks and one or more high-point tanks.

The off-gas system may comprise hold-up systems for the gasses where the fission gas products are allowed to decay further. These hold-up systems conventionally comprise charcoal bed technology for holding and storing the fission products, holding tanks for final storage, separation beds for separating the decay isotopes, especially the isotopes of Xe and Kr and various compressors to compress the gasses.

In one embodiment, the reactor vessel comprises a graphite moderator structure.

The graphite moderator structure may comprise graphite elements where the graphite has contact with the flowing molten fuel salt. The graphite structure may also be provided with liners wherein the molten fuel salt flows. The graphite of the graphite moderator structure may be provided with channels for the flow of the molten fuel salt and elongated blocks of graphite where the molten fuel salt flows in contact with the outer surface of the graphite blocks.

In one embodiment, the reactor vessel comprises a radiation shielding, preferably made of graphite surrounding the graphite moderator structure.

In one embodiment, the moderator structure is chosen from the group of a graphite moderator structure, a moderator structure comprising beryllium, a moderator structure comprising yttrium hydride.

In one embodiment, a gas pipe is provided from the one or more drain tanks to one or more high-point tanks located at a higher elevation than the reactor core, wherein the volume of the one or more high-point tanks is smaller than the volume of the one or more drain tanks, wherein the ratio of the volume of one or more high-point tanks to the volume of the one or more drain tanks is in the interval of 0.005 to 0.1.

In one embodiment, a gas pipe is provided from the one or more drain tanks to one or more high-point tanks located at a higher elevation than the reactor core, wherein the volume of the one or more high-point tanks is smaller than the volume of the one or more drain tanks.

In one embodiment, the ratio of the volume of one or more high-point tanks to the volume of the one or more drain tanks is in the interval of 0.005 to 0.1, preferably 0.01 to 0.08, preferably 0.02 to 0.06.

In one embodiment, there is provided one high-point tank and two drain tanks.

The relatively small volume of the high-point tank compared to the drain tanks is beneficial to avoid the issue of pressure oscillations between these gas containing volumes. Pressure oscillations between two gas containers with gas connections between each other are more prone to occur when the two gas container volumes have a similar magnitude.

In one embodiment, the molten salt pump is located at a higher elevation than the drain tanks, preferably in the upper compartment.

The location of the pump at an elevation higher than the drain tanks can allow the molten fuel salt to flow through the pump with the aid of gravity, backwards out of a pump inlet in the event of a pump failure and thereby help in securing a fast draining of molten fuel salt into the drain tanks at the lower elevation.

The location of the molten salt pump in the upper compartment enables better possibilities for radiation shielding since the pump is at a distance from the decaying off-gasses in the lower compartment in the drain tanks, such as a distance of 1 to 5 m.

In one embodiment, the molten salt pump is located in the lower compartment, preferably at the lowest elevation in the lower compartment and located above the molten fuel salt level in any of the one or more drain tanks.

In one embodiment, a bypass molten fuel salt pipe structure is provided connected to an outlet in the lower part of the reactor vessel to the one or more drain tanks, said bypass molten fuel salt pipe structure being capable of allowing a flow of molten fuel salt from the reactor vessel into the drain tanks.

The provision of a bypass molten fuel salt pipe structure can assist in a faster draining of the molten fuel salt from the reactor core in the reactor vessel, for example in the event of an emergency situation. The bypass molten fuel salt pipe structure comprises one or more pipes from the one or more outlets in the lower part of the reactor vessel to the one or more drain tanks.

In one embodiment, one or more high-point tank molten fuel salt pipes are provided, said one or more high-point tank molten fuel salt pipes having an auxiliary inlet and an auxiliary outlet to the molten fuel salt pipe, said auxiliary inlet and auxiliary outlet being in close vicinity to one or more reactor core outlets.

The high-point tank molten fuel salt pipe is a pipe that provides a partial flow of the total molten fuel salt flow to the high-point tank to form a puddle of molten fuel salt in the high-point tank. This will enable an auxiliary way of relieving the pressure from the off-gases that may be trapped in the reactor core. The close vicinity of the auxiliary inlet and outlet to the reactor core enables a quick relieve of some of the off-gas pressure formed in the reactor core. In one embodiment, the auxiliary inlet and outlet chare the same piping. This embodiment enables the formation of a puddle of molten salt rising up into the high-point tank due to the molten salt pump pressure. The inlet and outlet is shared for the molten salt to enter the high-point tank in this embodiment. The off-gases are vented to the off-gas system for further storage and treatment.

In one embodiment, the molten fuel salt has a composition selected from the group of compositions of:
sodium fluoride + potassium fluoride + uranium fluoride;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + uranium fluoride + thorium fluoride;
lithium fluoride + beryllium fluoride + uranium fluoride + thorium fluoride + zirconium fluoride;
sodium fluoride + rubidium fluoride + uranium fluoride; and
sodium fluoride + beryllium fluoride + uranium fluoride + thorium fluoride + zirconium fluoride.

In one embodiment, the molten fuel salt comprises U-235 compounds.

In one embodiment, the salt comprises uranium with U-235 in an enrichment level selected from the group of SEU (Slightly enriched uranium <2% U-235), LEU (Low-enriched uranium typically 3-5% U-235), HALEU (High-assay LEU 5-20% U-235) or even HEU (Highly enriched uranium, more than 20% U-235).

In one embodiment, the salt comprises uranium with U-235 with an enrichment value in the interval of 2.0-4.0% U-235.

The fissile material may be a fluoride salt of minor actinides.

When the fissile material is a fluoride salt comprising a fissile isotope, this fluoride salt has a carrier salt which may be sodium fluoride + potassium fluoride, also termed FNaK or lithium fluoride + beryllium fluoride also termed FLiBe. The combination of the fissile material containing enriched uranium and the carrier salt FNaK is sometimes referred to as FUNaK.

In one embodiment, the fuel salt does not comprise U-233.

In one embodiment, the molten fuel salt comprises Th-232.

When using Th-232 for a nuclear fission reactor, the fertile Th-232 is transmuted into the fissile U-233 forming a major part of the fuel for an MSR based on using the Th-232 fuel cycle. The Th-232 requires a surplus of neutrons to produce the U-233.

In one embodiment, there is provided a method of operating the molten salt reactor system according to the invention as described in any one of claims 1 to 8.

In one embodiment, the molten fuel salt flow is passing through the drain tanks, preferably the total molten fuel salt flow is passing through the drain tanks, and the pressure difference between the drain tank inlet for molten fuel salt (Pᵢₙ) in the drain tanks and the drain tank outlet for molten fuel salt (Pₒᵤₜ) contributes to maintaining the molten fuel salt flow, (Pᵢₙ > Pₒᵤₜ).

The total molten fuel salt flow is the flow defined as volume molten fuel salt per time emanating from all of the one or more reactor core outlets. The total flow of fuel salt through the drain tanks provides an improved thermal control of the drain tanks under nominal operation. This is in comparison to the case where only a bypass molten fuel salt flow is passing through the drain tanks.

In one embodiment, the total molten fuel salt flow is passing through the drain tanks and the pressure difference between the molten fuel salt inlet (Pin) in the drain tanks and the molten fuel salt outlet (Pout) to the molten fuel salt pump contributes to maintaining the molten fuel salt flow (Pin > Pout), wherein the molten fuel salt flow is entering the one or more drain tanks by an inlet in each of the one or more drain tanks in the upper part of the one or more drain tanks.

In one embodiment, the total molten fuel salt flow is passing through the drain tanks and the pressure difference between the molten fuel salt inlet (Pin) in the drain tanks and the molten fuel salt outlet (Pout) to the molten fuel salt pump contributes to maintaining the molten fuel salt flow (Pin > Pout), wherein the molten fuel salt flow is entering the one or more drain tanks by an inlet in each of the one or more drain tanks in the lower part of the one or more drain tanks.

In one embodiment, the decay heat from the gaseous fission products in the one or more drain tanks are removed from the lower compartment by the decay heat removal system.

The decay heat removal system exists primarily to ensure that heat is removed from the entire volume of the molten fuel salt and the gaseous fission products in the fuel salt loop including all the piping and components such as the heat exchanger etc. after the fission process has ceased. To cease the fission process, the fuel salt is removed from the moderator in the reactor core by draining the fuel salt into the drain tanks. The draining will take the reactor out of power operation and the draining is therefore typically carried out in case of maintenance or in an emergency situation. In general, during a normal power operation situation there is decay heat arising from decaying isotopes bound as salts in the molten fuel salt and decay heat arising from continuously produced fission products which are gaseous. These off-gasses will accumulate above the fuel salt because they are insoluble in the fuel salt and must be removed because pressures in the fuel salt loop would otherwise build up. By allowing the molten fuel salt flow to pass through the drain tanks, the off gases can build up above the surface of the continuously replenished puddle of molten fuel salt in the drain tanks. The off gases may be held in the drain tanks for a duration of time to allow the most active isotopes to decay and the heat from this decay is removed with the existing decay heat removal system. The off-gasses may also be removed continuously from the drain tanks to the off-gas system. The decay heat removal system thereby has two functions: For removing decay heat during maintenance/accidents and for removing decay heat for the freshly formed gaseous fission products. Eventually, the off gases are vented from the drain tanks via outlets to storage and further treatment. This is done after most of the short-lived off-gas isotopes have decayed thereby ensuring that the remaining decay heat from the daughters of the short-lived off-gas isotopes can be treated in the off-gas system comprising the storage of long-lived isotopes. The venting may be assisted by a purging gas through the one or more drain tanks via a drain tank gas inlet and a drain tank gas outlet.

Although the method of removing heat continuously from the drain tanks during power operation also removes heat that could be used for other purposes, meaning so-called parasitic heat loss takes place, this downside is fully compensated by the advantages. One advantage is that the drain tanks are continuously heated which assures that there will be no mechanical stresses from a sudden heat raise in case of e.g. an emergency heating. This will spare a dedicated system for continuously keeping the drain tanks hot. Another advantage is that there is no need for a separate holding tank for the short-lived off-gas isotopes before they are vented for further treatment in the off-gas system. This will save space for the entire nuclear power plant comprising the molten salt reactor system and the off-gas system.

In one embodiment, one or more gas valves located on the gas pipe from one or more high-point tanks are opened, draining of the molten fuel salt into the one or more drain tanks takes place in the fuel salt loop, from the reactor core via a molten fuel salt reactor core outlet and/or from the reactor core via the bypass molten fuel salt pipe and/or from the molten fuel salt pump via a pump inlet for molten fuel salt.

The drain path for the molten fuel via a reactor core outlet comprises piping from the reactor core outlet to the one or more drain tanks.

The drain path for the molten fuel via the pump inlet comprises piping from the molten fuel salt pump inlet to the one or more drain tanks. The fuel salt may potentially drain due to counter-current flow, albeit slowly, when the pump stops. This serves as a diverse method for draining and the counter-current flow in the draining situation flows out of and through the pump inlet for molten fuel salt where the fuel salt enters the pump in normal operation.

In one embodiment the draining from the reactor core via the bypass molten fuel salt pipe is a continuous bypass so that a draining to some extent takes place from the reactor core into the one or more drain tanks during normal operation. Keeping the bypass molten fuel salt pipe open has the advantage that no active or passive system to open a flow from the core is needed for the draining via the bypass molten fuel salt pipe.

In one embodiment, the off-gases are vented to the off-gas system from the one or drain tanks, the one or more high-point tanks and the molten fuel salt pump.

In one embodiment, a power barge comprising at least one molten salt reactor system according to any one of claims 1 to 8 is provided to generate heat evolved in a nuclear fission reaction and at least one steam turbine generator to produce electricity utilising said generated heat.

The compactness of the molten salt reactor system in isolation and in combination with the off-gas system is especially suited for a maritime structure such as a barge where space requirements for the various components are important.

### Brief description of the drawings

In the following the invention will be explained in greater detail with the aid of an example and with reference to the schematic drawings, in which
Figure 1 shows the molten salt reactor system according to a first embodiment of the invention.
Figure 2 shows the molten salt reactor system according to another embodiment of the invention.
Figure 3 shows the molten salt reactor system according to a first embodiment of the invention, including the off-gas system.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

### Detailed Description

The invention will now be illustrated in the following non-limiting examples.

### Example 1

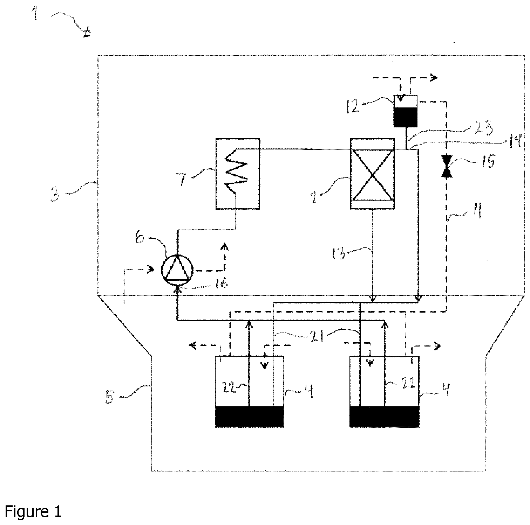

In this example, the molten salt reactor system 1 is described with reference to figure 1. A reactor core 2 is located in the upper compartment 3, where piping shown as solid lines from the reactor core 2 connects to two drain tanks 4 located in the lower compartment 5 under the upper compartment 3. The two drain tanks 4 each have their own drain tank inlet and their own drain tank outlet for molten salt. Each pipe connecting to the drain tank inlets and drain tank outlets consists of an inner section inside the drain tank 4 and an outer section outside the drain tank 4. The molten salt flow direction is shown with an arrow from the reactor core 2 to the drain tank inlet pipe 21 and the molten fuel salt exits the drain tank outlet pipe 22, also showing the molten salt flow direction with an arrow. From the exit of the drain tanks 4, a molten fuel salt pipe connects to the pump inlet 16, and further from the exit of the pump to the primary heat exchanger 7. The pump 6 is located at a higher position than the drain tanks 4. From the exit of the primary heat exchanger 7, a molten salt pipe connects to the upper inlet of the reactor core 2, forming a closed loop.

A high-point tank 12 is shown above the reactor core 2. The high-point tank has a high-point tank molten fuel salt pipe 23 with an auxiliary outlet 14 to the molten fuel salt pipe. The auxiliary inlet is shared with the auxiliary outlet 14. The auxiliary outlet 14 is shown in close vicinity to a reactor core outlet for molten fuel salt.

A bypass molten fuel salt pipe structure 13 is shown as a single pipe is shown from the bottom part of the reactor core 2 to the molten fuel salt piping that leads further to the drain tanks 4. There is not a valve for opening/closing the flow of molten fuel salt from the reactor core 2 to the drain tanks 4 via the bypass molten fuel salt pipe structure 13. There is therefore a constant flow of molten fuel salt to the drain tanks via the bypass molten fuel salt pipe structure 13 but of less magnitude than the flow of molten fuel salt to the drain tanks from the reactor core outlet at the top of the reactor core 2.

The primary heat exchanger 7 is depicted with a zig-zag flow of molten fuel salt inside the primary heat exchanger where the heat obtained from the fission process in the reactor core is transferred to a secondary flow of a secondary molten salt. This flow of the secondary molten salt is not shown in figure 1. The heat from the secondary molten salt is eventually transferred to produce steam to drive an electricity producing turbine, also not shown.

A passive decay heat removal system (not shown) is surrounding the lower compartment 5 so that the decay heat can be transferred from the drain tanks comprising the decaying gaseous fission products. The type of heat transfer from the drain tanks 4 to the closest part of the decay heat system is a heat radiation transfer from the drain tank walls.

The molten salt reactor system 1 comprises various gas pipes and gas systems: A gas pipe 11 is provided from both drain tanks 4 to the high-point tank 12 located at a higher elevation than the drain tanks 4 and the reactor core 2. A valve 15 on the gas pipe can provide a pressure exchange between the high-point tank and the drain tanks.

### Example 2

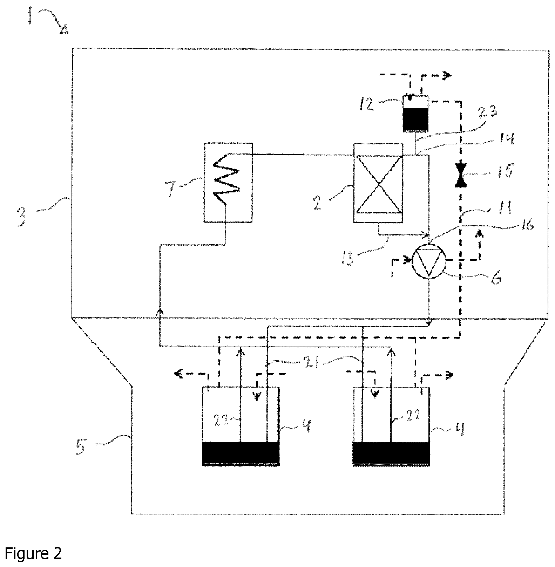

In this example, another embodiment of the molten salt reactor system 1 is described with reference to figure 2. The embodiment shown in figure 2 resembles the embodiment described in Example 1 except that the molten fuel salt pump 6 is located between the reactor core 2 and the two drain tanks 4. Another amendment is that the bypass molten fuel salt pipe structure 13 connects from the reactor vessel to the molten fuel salt pipe before and in the vicinity of the pump inlet 16.

### Example 3

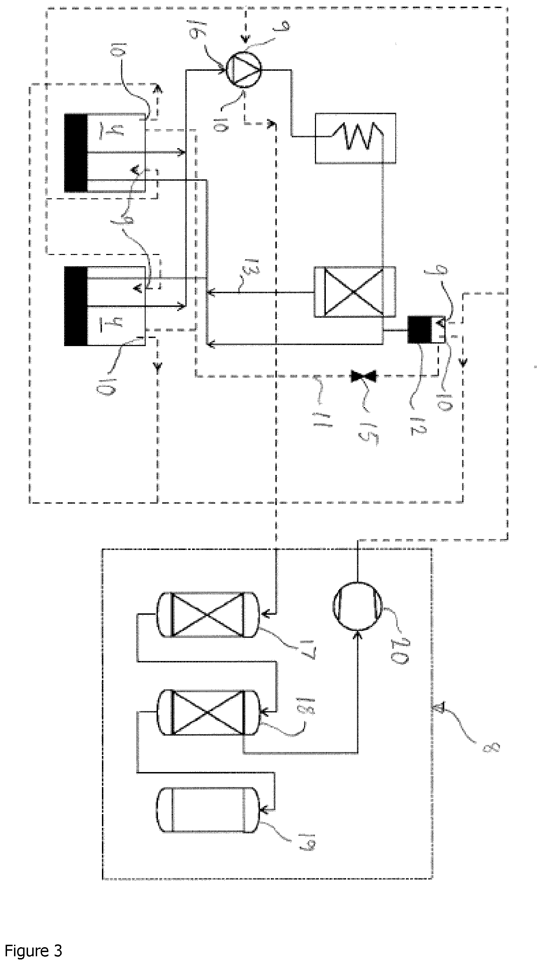

In this example, the connection from the molten salt fuel loop and the components of the molten fuel salt loop to the off-gas system 8 is described with reference to figure 3. When the off-gasses needs to be removed from the various parts of the molten fuel salt loop for further processing in the off-gas system 8, the off-gas outlets 10 are opened and the off-gasses are directed to a gas piping leading to the gas receival tank 17 in the off-gas system 8. Four off-gas outlets 10 are shown in fig. 2: One for the molten fuel salt pump 6 and the high-point tank, and one for each of the two drain tanks 4. From each of these off-gas outlets piping leads to the gas receival tank 17. The off gasses mix with a helium carrier gas in the piping to enable the transportation to the gas receival tank 17. The gas receival tank 17 provides an intermediate storage where further decay heat evolves. Once the pressure in the gas receival tank 17 reach a pre-determined pressure, the purification and separation functions will be initiated and run until a lower set-point in the receival tanks is reached. The purification and separation functions of the off gasses are carried out in the gas treatment tank 18 connected to the gas receival tank 17. Some of the off gasses are separated in the gas treatment tank 18 from the gas stream and are directed to an isotope storage tank 19. The remaining gas stream with helium as the carrier gas exits the gas treatment tank 18 with a purification to a degree of >99 vol.% He and is led back to the gas piping in connection with the components of the molten fuel salt loop. A compressor 20 assist the gas flow. The purified gas enters the open off-gas inlets 9. Four off-gas inlets 9 are shown in fig. 2: One for the molten fuel salt pump 6 and the high-point tank, and one for each of the two drain tanks 4.

### Example 4

In this example, the draining of molten fuel salt into the drain tanks is described with reference to figure 1. The gas pressure should be regulated by three actions: 1) The molten fuel salt pump 6 is stopped. 2) The gas valve 15 on the gas pipe 11 between high-point tank 12 and drain tanks 4 is opened so that gas inside drain tanks 4 would flow towards the high-point tank 12 and inducing that the volume in the drain tanks 4 becomes occupied by the fuel salt. 3) The off-gas inlets 9 are closed and the off-gas outlets 10 are opened. This will ensure that no more off-gas will be injected into the drain tanks 4 and the volume of gas that before was occupying the drain tanks 4 will be replaced by the fuel salt; this gas would preferably instead flow to the high-point tank 12 or the off-gas outlets 10. It may be noted that the actions of the pump stop, and the gas system connection closure is not strictly needed for draining but will contribute to a fast draining of the molten fuel salt into the drain tanks 4. The draining of the molten fuel salt is gravity assisted and will be from the reactor core outlet into the piping downwards to the drain tanks 4 in the lower compartment 5. Also, the draining takes place downwards to the drain tanks 4 via the bypass molten fuel salt pipe 13 from the lower part of the reactor vessel and backwards out of the pump inlet 16 from the molten fuel salt pump 6 in the upper compartment 3. All the above draining routes takes place from points at higher elevation in the system to the drain tanks 4 located at a lower elevation.

### Reference signs list

1 A molten salt reactor system
2 a reactor core
3 an upper compartment
4 a drain tank
5 a lower compartment
6 a molten fuel salt pump
7 a heat exchanger
8 an off-gas system
9 an off-gas inlet
10 an off-gas outlet
11 a gas pipe
12 a high-point tank
13 a bypass molten fuel salt pipe
14 an auxiliary outlet
15 a gas valve
16 a pump inlet
17 a gas receival tank
18 a gas treatment tank
19 an isotope storage tank
20 a compressor

## Claims

1. A molten salt reactor system (1) comprising
- a reactor vessel comprising a reactor core (2) in an upper compartment (3), and
- one or more drain tanks (4) situated in a lower compartment (5) below the upper compartment, and
- a molten fuel salt pump (6), and
- a heat exchanger (7), wherein
a molten fuel salt flow direction is provided in a fuel salt loop, said fuel salt loop comprising the reactor core (2), the one or more drain tanks (4), the molten fuel salt pump (6), and the heat exchanger (7), the direction of the molten fuel salt flow is from the heat exchanger (7) towards the reactor core (2), wherein
(a)
- the one or more drain tanks (4) are located between the reactor core (2) and the molten fuel salt pump (6) in the molten fuel salt flow direction and
- the molten fuel salt pump (6) is located between the one or more drain tanks (4) and the heat exchanger (7) in the molten fuel salt flow direction and
- the heat exchanger (7) is located between the molten fuel salt pump (6) and the reactor core (2) in the molten fuel salt flow direction and
- the reactor core (2) is located between the heat exchanger (7) and the one or more drain tanks (4) in the molten fuel salt flow direction, or
(b)
- the molten fuel salt pump (6) is located between the reactor core (2) and the one or more drain tanks (4) in the molten fuel salt flow direction and
- the one or more drain tanks (4) are located between the molten fuel salt pump (6) and the heat exchanger (7) in the molten fuel salt flow direction and
- the heat exchanger (7) is located between the one or more drain tanks (4) and the reactor core (2) in the molten fuel salt flow direction and
- the reactor core (2) is located between the heat exchanger (7) and the molten fuel salt pump (6) in the molten fuel salt flow direction, wherein
the lower compartment (5) is provided with a passive decay heat removal system.

2. A molten salt reactor system (1) according to claim 1, wherein a gas pipe (11) is provided from the one or more drain tanks (4) to one or more high-point tanks (12) located at a higher elevation than the reactor core (2), wherein the volume of the one or more high-point tanks (12) is smaller than the volume of the one or more drain tanks (4), wherein the ratio of the volume of one or more high-point tanks (12) to the volume of the one or more drain tanks (4) is in the interval of 0.005 to 0.1.

3. A molten salt reactor system (1) according to any one of claim 1 or 2, further comprising an off-gas system (8) connected to one or more off-gas inlets (9) and off-gas outlets (10) on
- the one or more drain tanks (4), the one or more high-point tanks (12), and the molten fuel salt pump (6).

4. A molten salt reactor system (1) according to any one of the above claims, wherein the reactor vessel comprises a graphite moderator structure.

5. A molten salt reactor system (1) according to any one of the above claims, wherein the molten salt pump (6) is located at a higher elevation than the one or more drain tanks (4), preferably in the upper compartment (3).

6. A molten salt reactor system (1) according to any one of the above claims, wherein a bypass molten fuel salt pipe structure (13) is provided connected to an outlet in the lower part of the reactor vessel to the one or more drain tanks (4), said bypass molten fuel salt pipe structure (13) being capable of allowing a flow of molten fuel salt from the reactor vessel into the drain tanks (4).

7. A molten salt reactor system (1) according to any one claims 2 to 6, wherein one or more high-point tank molten fuel salt pipes (23) are provided, said one or more high-point tank molten fuel salt pipes (23) having an auxiliary inlet and an auxiliary outlet (14) to the molten fuel salt pipe, said auxiliary inlet and auxiliary outlet (14) being in close vicinity to one or more reactor core outlets.

8. A molten salt reactor system (1) according to any one of the above claims, wherein the molten fuel salt has a composition selected from the group of compositions of:
sodium fluoride + potassium fluoride + uranium fluoride;
sodium fluoride + potassium fluoride + uranium fluoride + thorium fluoride;
sodium fluoride + potassium fluoride + fluorides of minor actinides;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + fluorides of minor actinides;
lithium fluoride + beryllium fluoride + uranium fluoride + thorium fluoride;
lithium fluoride + beryllium fluoride + uranium fluoride + thorium fluoride + zirconium fluoride;
sodium fluoride + rubidium fluoride + uranium fluoride; and
sodium fluoride + beryllium fluoride + uranium fluoride + thorium fluoride + zirconium fluoride.

9. A method of operating a molten salt reactor system (1) according to any one of claims 1 to 8.

10. A method of operating a molten salt reactor system (1) according to claim 9, wherein the molten fuel salt flow is passing through the drain tanks (4), preferably the total molten fuel salt flow is passing through the drain tanks (4), and the pressure difference between the drain tank inlet for molten fuel salt (Pᵢₙ) in the drain tanks (4) and the drain tank outlet for molten fuel salt (Pₒᵤₜ) contributes to maintaining the molten fuel salt flow, (Pᵢₙ > Pₒᵤₜ).

11. A method of operating a molten salt reactor system (1) according to any one of claims claim 9 to 10, wherein decay heat from the gaseous fission products in the one or more drain tanks (4) are removed from the lower compartment (5) by the decay heat removal system.

12. A method of operating a molten salt reactor system (1) according to any one of claims 9 to 11, wherein
- one or more gas valves (15) located on the gas pipe (11) from one or more high-point tanks (12) are opened,
- draining of the molten fuel salt into the one or more drain tanks (4) takes place in the fuel salt loop,
from the reactor core (2) via a molten fuel salt reactor core outlet and/or from the reactor core (2) via the bypass molten fuel salt pipe (13) and/or from the molten fuel salt pump (6) via a pump inlet (16) for molten fuel salt.

13. A method of operating a molten salt reactor system (1) according to any one of claims 9 to 12, wherein the off-gases are vented to the off-gas system (8) from the one or drain tanks (4), the one or more high-point tanks (12) and the molten fuel salt pump (6).

14. A power barge comprising at least one molten salt reactor system (1) according to any one of claims 1 to 8 to generate heat evolved in a nuclear fission reaction and at least one steam turbine generator to produce electricity utilising said generated heat.
